Europäisches Patentamt

European Patent Office

Office européen des brevets

(11) Veröffentlichungsnummer: **0 149 230**
**A2**

(12) ## EUROPÄISCHE PATENTANMELDUNG

(21) Anmeldenummer: **84116203.5**

(22) Anmeldetag: **22.12.84**

(51) Int. Cl.⁴: **G 02 C 5/22**

(30) Priorität: **14.01.84 DE 3401213**

(43) Veröffentlichungstag der Anmeldung:
**24.07.85 Patentblatt 85/30**

(84) Benannte Vertragsstaaten:
**AT CH DE FR IT LI**

(71) Anmelder: **OBE-Werk Ohnmacht & Baumgärtner GmbH & Co. KG**
**Turnstrasse 20**
**D-7536 Ispringen(DE)**

(72) Erfinder: **Drlik, Günther**
**Adolf-Sauter-Strasse 3**
**D-7530 Pforzheim 8(DE)**

(74) Vertreter: **Hubbuch, Helmut, Dipl.-Ing et al,**
**Patentanwälte Dr. Rudolf Bauer Dipl.-Ing. Helmut**
**Hubbuch Dipl.-Phys. Ulrich Twelmeier Westliche**
**Karl-Friedrich-Strasse 29-31**
**D-7530 Pforzheim(DE)**

(54) **Federscharnier für Brillen.**

(57) Die Erfindung betrifft ein Federscharnier für Brillen bestehend aus einem Bügelteil mit Aufnahme für einen Schieberteil mit Bügelscharnier, welche Aufnahme den Schieberteil gegen Federwirkung ausfahrbar hält, wobei das Bügelscharnier mit dem Mittelteilscharnier zusammenwirkt und wobei es Aufgabe der Erfindung ist einen leichteren und dauerhafteren Schnappeffekt zwischen Ruhe- und Offenstellung bei solchen Federscharnieren mit Überdrückbarkeit in der Offenstellung zu erreichen. Dies erfolgt durch Zwischenschaltung eines auf den Nockenflanken abrollenden Rollenkörpers, welcher im Schieberaufnahmeende gelagert ist.

Fig.1

EP 0 149 230 A2

Croydon Printing Company Ltd

- 2 -
1

Beschreibung:

Die Erfindung betrifft ein Federscharnier für Brillen bestehend aus einem Bügelteil mit Aufnahme für einen Schieberteil mit Bügelscharnier, welche Aufnahme den Schieberteil gegen Federwirkung ausfahrbar hält, wobei das Bügelscharnier mit dem Mittelteilscharnier zusammenwirkt.

Nach der DE-OS 32 13 174 sind solche Federscharniere bekannt, bei welchen die Scharnieraugen vom Mittelteilscharnier zum Überrasten des Bügelendes zur Erzielung eines Schnappeffekts beim Übergang in die Ruhe- bzw. Offenstellung nockenartig ausgebildet sind. Es sind auch weitere Ausführungen von Federscharnieren mit Schnappeffekt beim Übergang von der Ruhe- in die Offenstellung und umgekehrt bekannt. Bei allen diesen Ausführungen tritt gleitende Reibung zwischen unter Federwirkung aufeinanderschiebenden Metallteilen auf, was zu Materialverreibung führt und den Schnappeffekt stört.

Desweiteren ist auch die Verwendung von Kugeln für die Schnapprastung in Ruhe- und Offenstellung in Verbindung mit Nocken und Rastkerben bekannt. Dies bringt aber infolge der Punktauflage einen hohen spez. Druck und damit Einlaufbahnen mit sich, welche den Schnappeffekt behindern und nur durch Einsatz besonderer Stahlteile zu beheben sind.

- ✗ -
2

Es ist nun Aufgabe der Erfindung einen leichten und dauerhaften Schnappeffekt zwischen Ruhe- und Offenstellung bei Federscharnieren mit Überdrückbarkeit in der Offenstellung zu erreichen.

Hierzu kennzeichnet sich das erfindungsgemäße Federscharnier nach dem Oberbegriff von Anspruch 1 durch die Zwischenschaltung eines auf den Nockenflanken abrollenden Rollenkörpers, welcher im Schieberaufnahmeende gelagert ist. Hierbei erfolgt die Lagerung des Rollenkörpers im Schieberaufnahmeende vorzugsweise mittels Rollenträger, welcher die Rollenachse mit beidseitig umgreifenden Backen hält, wobei der Rollenträger gleichzeitig als Federanschlag für den ausfahrbaren Schieberteil dienen kann.

Hierdurch wird einerseits bei den sich unter Federwirkung aufeinanderbewegenden Teilen eine rollende Reibung unter Linienberührung erreicht, was ein leichtes Schnappen gewährleistet, Materialveränderung vermeidet und damit die Lebensdauer erhöht und andererseits durch die Verwendung des Rollenträgers als Federanschlag für den ausfahrbaren Schieberteil die Montage erleichtert.

Weitere Einzelheiten des Federscharniers gemäß der Erfindung ergeben sich aus den in der Zeichnung dargestellten bevorzugten Ausführungsbeispielen mit nachfolgender Beschreibung und zwar zeigen:

0149230

- 5 -

J

Figur 1         die perspektivische Gesamtdarstellung eines solchen Federscharniers,

Figur 2 bis 5    die perspektivische Darstellung von Einzelteilen hierzu,

Figur 6 und 7    zwei Schnittdarstellungen zu diesem Federscharnier in verschiedenen Funktionslagen und

Figur 8         die Schnittdarstellung zu einem weiteren Ausführungsbeispiel.

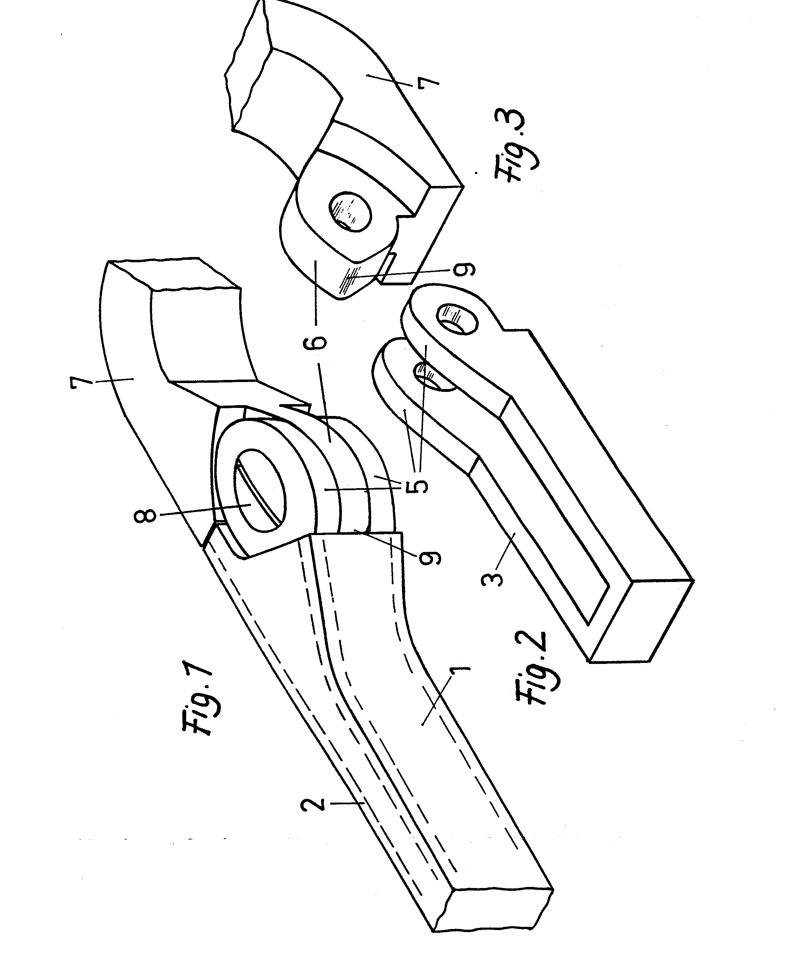

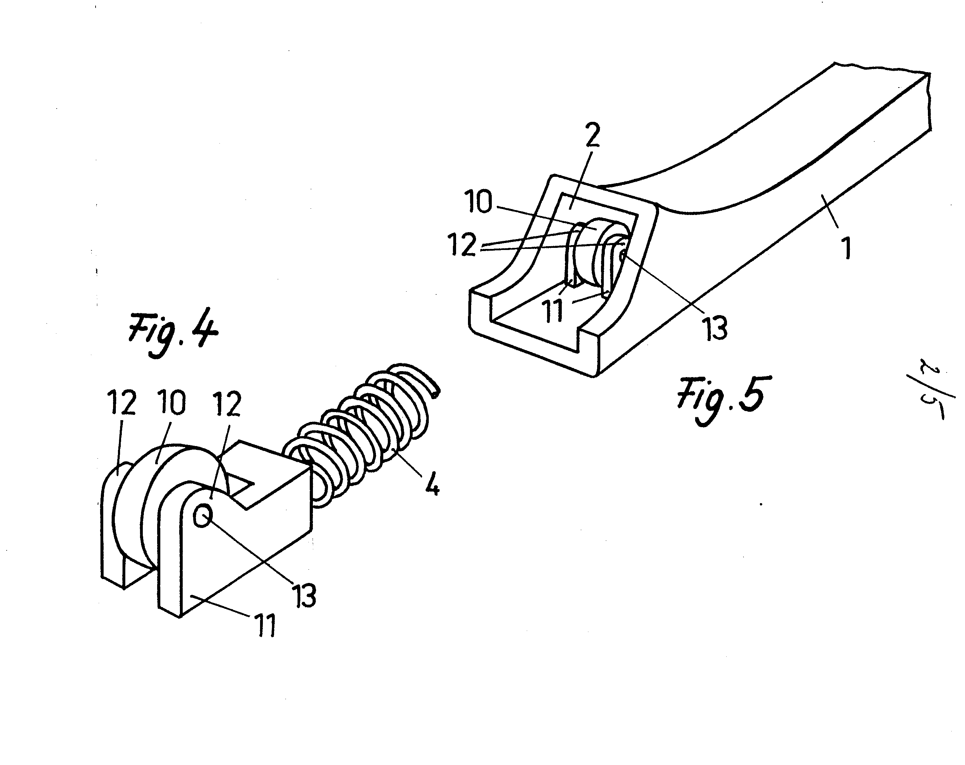

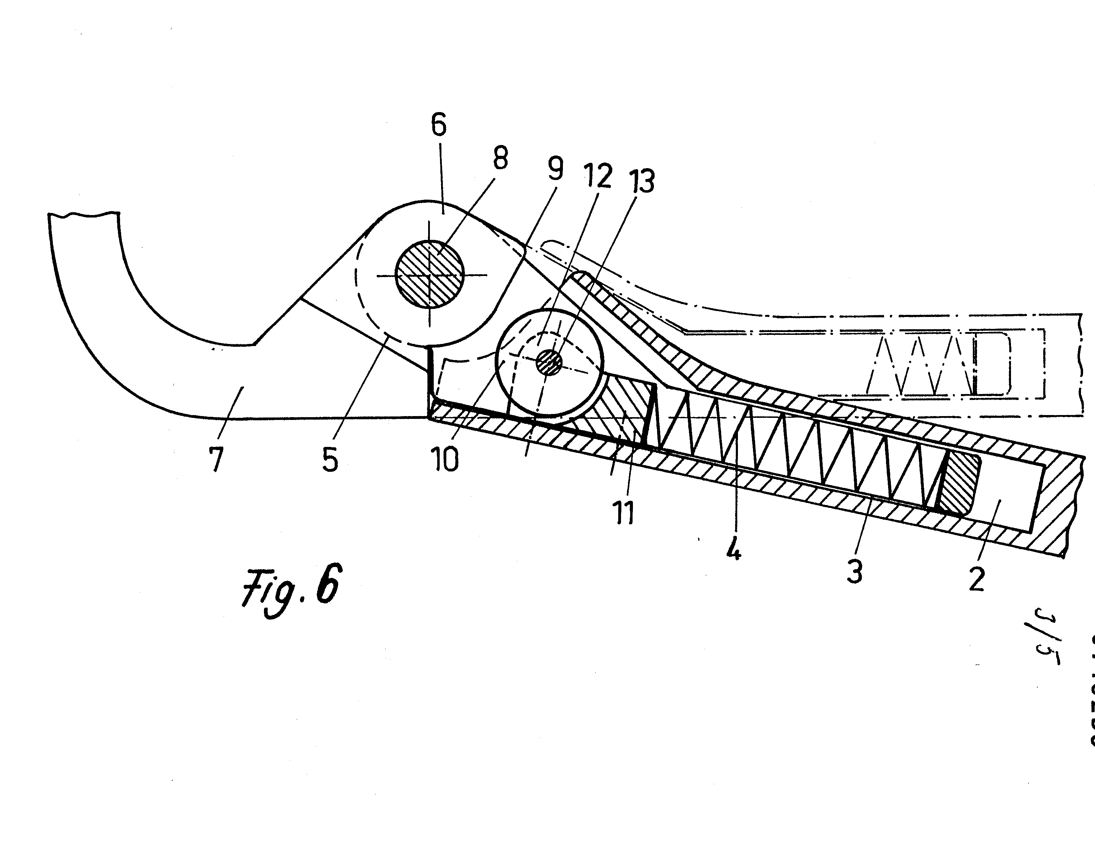

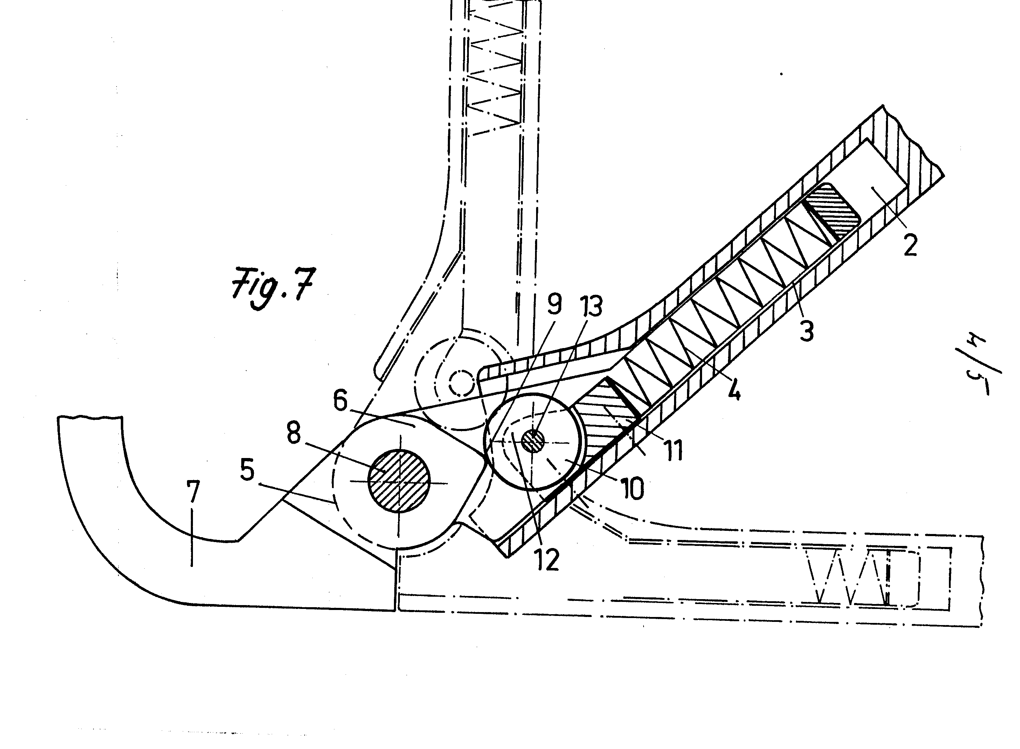

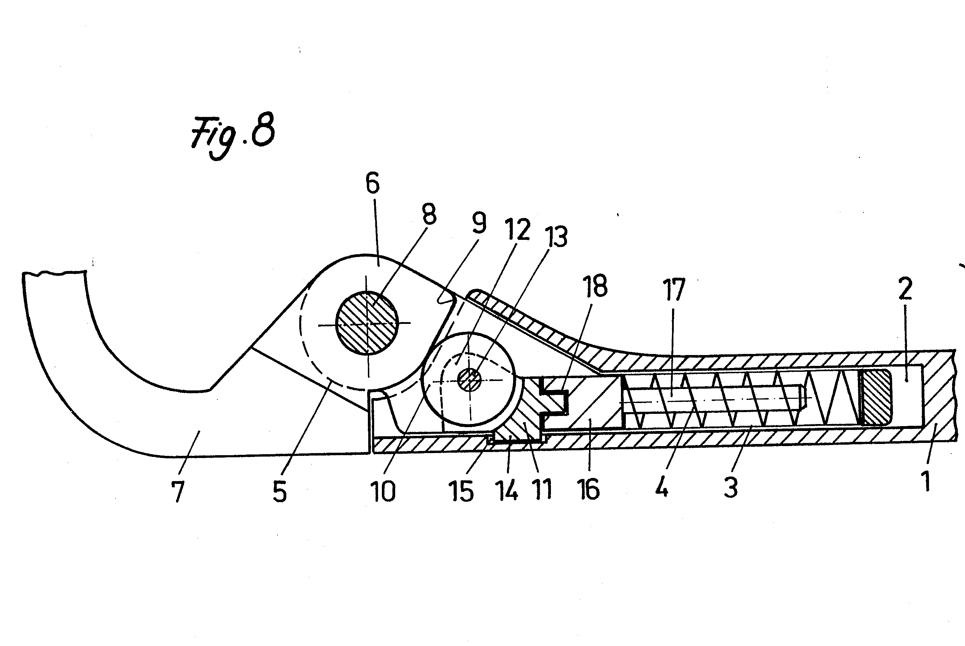

Wie aus der Zeichnung ersichtlich wird, besteht das Federscharnier aus dem Bügelteil 1 mit Aufnahme 2 für die hier U-förmige Schieberzunge 3 mit Feder 4, wobei die Schieberzunge 3 in die Scharnieraugen 5 des Bügelscharniers auslaufen, welche mit dem Scharnierauge 6 des Mittelteilscharniers 7 mittels Scharnierschraube 8 als Gelenkverbindung zusammenwirken. Hier ist das Mittelteil- Scharnierauge 6 bei 9 nockenartig zum schnappenden Überrasten des Bügelendes von Ruhe- in Offenstellung ausgebildet. Hierbei ist die Zwischenschaltung eines Rollenkörpers 10 vorgesehen, welcher in einem Rollenträger 11 in der Schieberaufnahme 2 gelagert ist und für eine Abrollung auf den Nockenflanken und damit leichtem Überschnappen sorgt. Der

- 8 -

Rollenträger 11 umgreift hierbei den Rollenkörper 10 beidseitig mit Backen 12 und lagert mit diesen (12) die Rollenachse 13, welche hier als Steckachse ausgebildet ist.

Wie weiter aus der Zeichnung ersichtlich wird, dient der Rollenträger 11 gleichzeitig als Anschlag für die Feder 4, welche zum Überdrücken des Brillenbügels in Verbindung mit der ausfahrbaren Schieberzunge 3 vorgesehen ist. Hierzu umgreift die ausfahrbare, U-förmige Schieberzunge 3 mit eingelegter Feder 4 mit ihren in die Scharnieraugen 5 auslaufenden Enden den Rollenträger 11 beidseits. Der Rollenträger 11 ist auf dem Boden der Aufnahme 2 festgelegt, was bei der Ausführung nach Figur 8 mittels bodenseitig angebrachten Vierkantstutzen 14 unter Verrastung in einer runden Bodenausnehmung 15 in der Schieberaufnahme 2 bei Federanlage 4 erfolgt. Hiernach ist auch im Rollenträger 11 beim zweiten Ausführungsbeispiel federseitig der Endkolben 16 eines Federführungsbolzens 17 mittels Nut-Federverbindung 18 rastbar, womit sich eine einfache Montage ergibt.

Die Lagerung des Rollenkörpers 10 erfolgt vorzugsweise über eine Rollenachse 13, wobei der Radius des Rollenkörpers um ein Vielfaches größer ist als der Achsradius, um eine leichte und sichere Abrollung zu gewährleisten.

PATENTANWÄLTE

⌐LF BAUER · DIPL.-ING. HELMUT
DIPL.-PHYS. ULRICH TWELMEIER

0149230

WESTLICHE 29 – 31 (AM LEOPOLDPLATZ)
D-7530 PFORZHEIM (WEST-GERMANY)
☎ (0 72 31) 10 22 90/70 · TELEGRAMME: PATMARK

— 1 —

13.01.1984    II/Be

Fa. OBE-Werk Ohnmacht & Baumgärtner GmbH & Co. K.G.,
7536 Ispringen

---

" Federscharnier für Brillen "

---

Patentansprüche:

1. Federscharnier für Brillen bestehend aus einem
   Bügelteil mit Aufnahme für einen Schieberteil mit
Bügelscharnier, welche Aufnahme den Schieberteil
gegen Federwirkung ausfahrbar hält, wobei das
Bügelscharnier mit dem Mittelteilscharnier zusammenwirkt und das Scharnierauge vom Mittelteilscharnier zum Überrasten des Bügelendes zur Erzielung
eines Schnappeffekts beim Übergang in die Ruhe-
bzw. Offenstellung nockenartig ausgebildet ist,
g e k e n n z e i c h n e t   d u r c h  die Zwischenschaltung eines auf den Nockenflanken abrollenden
Rollenkörpers, welcher im Schieberaufnahmeende
gelagert ist.

2. Federscharnier nach Anspruch 1, d a d u r c h   g e-
   k e n n z e i c h n e t, daß die Lagerung des Rollen-

- 2 -

körpers im Schieberaufnahmeende mittels Rollenträger erfolgt, welcher die Rollenachse mit beidseitig umgreifenden Backen hält.

3. Federscharnier nach Anspruch 2, d a d u r c h g e k e n n z e i c h n e t, daß der Rollenträger gleichzeitig als Federanschlag für den ausfahrbaren Schieberteil dient.

4. Federscharnier nach einem der Ansprüche 1 bis 3, d a d u r c h g e k e n n z e i c h n e t, daß der ausfahrbare Schieberteil als U-förmige Schieberzunge mit eingelegter Feder den Rollenkörper (Rollenträger) in der Schieberaufnahme mit seinem in die Scharnieraugen auslaufenden Enden beidseits umgreift.

5. Federscharnier nach einem der Ansprüche 2 bis 4, d a d u r c h g e k e n n z e i c h n e t, daß der Rollenträger mittels Stutzen in einer Bodenausnehmung in der Schieberaufnahme bei Federanlage verrastbar ist.

6. Federscharnier nach Anspruch 5, d a d u r c h g e- k e n n z e i c h n e t, daß in den Rollenträger federseitig der Endkolben eines Federführungsbolzens mittels Nut-Federverbindung rastbar ist.

0149230

1/5

Fig.1

Fig.2

Fig.3

Fig.4

Fig.5

2/5

0149230

Fig. 6

0149230

Fig.7

4/5

0149230

Fig. 8